Europäisches Patentamt

European Patent Office

Office européen des brevets

(19)

(11) Veröffentlichungsnummer: **0 111 438**
**B1**

# (12) EUROPÄISCHE PATENTSCHRIFT

(45) Veröffentlichungstag der Patentschrift: **28.09.88**

(51) Int. Cl.⁴: **G 01 S 17/10,** G 01 S 17/88

(21) Anmeldenummer: **83710068.4**

(22) Anmeldetag: **07.10.83**

(54) **Verfahren zur Messung der Wolkenhöhe.**

(30) Priorität: **15.10.82 SE 8205864**

(43) Veröffentlichungstag der Anmeldung:
**20.06.84 Patentblatt 84/25**

(45) Bekanntmachung des Hinweises auf die
Patenterteilung:
**28.09.88 Patentblatt 88/39**

(84) Benannte Vertragsstaaten:
**DE FR GB**

(56) Entgegenhaltungen:
**DE-A-1 798 438
FR-A-2 393 321
FR-A-2 394 816
FR-A-2 463 937
US-A-4 106 872**

**PATENTS ABSTRACTS OF JAPAN, Band 6, Nr.
265 (P-165) (1143), 24. Dezember 1982**

(73) Patentinhaber: **ASEA AB**
**S-721 83 Västeras (SE)**

(72) Erfinder: **Löfgren, Folke**
**Svärdsgatan 8**
**S-723 47 Västeras (SE)**
Erfinder: **Söderström, Sven Erik**
**Stangjärnsgatan 237**
**S-724 73 Västeras (SE)**

(74) Vertreter: **Boecker, Joachim, Dr.-Ing.**
**Rathenauplatz 2-8**
**D-6000 Frankfurt a.M. 1 (DE)**

**Beschreibung**

Die Erfindung betrifft ein Verfahren zur Messung der Wolkenhöhe gemäß dem Oberbegriff des Anspruches 1.

Die Bestimmung der Wolkenhöhe durch solche Laufzeitmeßverfahren geschieht dadurch, daß die Zeitspanne gemessen wird zwischen der Aussendung eines Lichtimpulses und dem Zeitpunkt, in welchem von diesem Lichtimpuls herrührendes reflektiertes Licht von bestimmter Stärke im Empfänger erfaßt wird. Zeigt nämlich das reflektierte Licht eine bestimmte über dem ständig einfallenden Störpegel liegende Stärke, so bedeutet dies, daß das Licht von einer Wolke reflektiert wurde. Dieses Verfahren sowie das zugehörige Erfassungsprinzip ist aus der US—A—3 741 655 bekannt. Gemäß diesem Verfahren wird der gesamte Höhenmeßbereich in eine Anzahl von Höhenintervallen aufgeteilt. Dabei wird schrittweise jedes Höhenintervall auf das Vorhandensein einer Wolke ausgemessen, indem für jedes Höhenintervall mindestens ein Impuls ausgesandt wird, und der Empfänger durch entsprechende, in bezug auf die ausgesandten Impulse zeitverzögerte Torimpulse kurzfristig aufgesteuert wird. Die zeitliche Verzögerung der Torimpulse wächst dabei schrittweise, so daß die Öffnungszeit des Empfängers schrittweise dem aus jeweils einem Höhenintervall evtl. reflektierten Licht angepaßt ist. Da die (für jeweils ein Höhenintervall) empfangene Nutzenergie der reflektierten Signale linear mit der Anzahl der ausgesandten Impulse zunimmt, die aufgrund des Störpegels im Empfänger erfaßte Energie jedoch nur mit der Wurzel aus der Anzahl der ausgesandten Signale zunimmt, steigt das Störverhältnis (Verhältnis aus Nutzsignal zu Störpegel) mit der Wurzel aus der Anzahl der gefilterten, d.h. aus dem jeweiligen Höhenintervall reflektierten, Echoimpulse. Da nur die von Wolken verursachten Echosignale erfaßt werden sollen, stellen die Echosignale die durch Wassertropfen und andere Partikel im Luftraum unterhalb der Wolke verursacht werden, eine Störung dar, die sich in einer unerwünschten Dämpfung des ausgesandten Meßsignals bemerkbar macht. Unabhängig davon nimmt die von einer Wolke reflektierte Energie bei gegebener Energie des ausgesandten Meßsignals wegen der quadratischen Ausbreitung des Lichtes mit dem Quadrat der Höhe der Wolke ab. Um den letztgenannten Einfluß auf die Größe des gemessenen reflektierten Signals zu kompensieren, kann die Meßfolge für die einzelnen Höhenintervalle mit einer fest eingestellten, zeitgesteuerten Empfindlichkeitsänderung und/oder Sendeenergie erfolgen. Die auf diese Weise gewinnbaren Meßwerte werden durch die vorgenannte Dämpfung durch Partikel im Luftraum verfälscht bzw. es kann die Messung vorhandener Wolken durch diese Dämpfung völlig unmöglich gemacht werden. Bei fest eingestellter Sendeenergie ist außerdem ein sehr großer dynamischer Bereich des Empfängers und Signaldetektors erforderlich. Das bekannte Verfahren mit konstanter ausgesandter Lichtenergie, umabhängig von der tatsächlichen Dämpfung in der Atmosphäre unterhalb des jeweiligen Höhenintervalls bewirkt bei vielen Wettersituationen ein für die Erzielung eines zufriedenstellenden Meßsignals fehlerhaftes Verhältnis zwischen der verfügbaren und notwenidgen Meßenergie für verschiedene Höhenintervalle. Außerdem wird bei dem bekannten Verfahren eine relative Messung zwischen zwei verhältnismäßig naheliegenden Höhenintervallen durchgeführt, wodurch man keine Kompensationsmöglichkeiten hinsichtlich einer unterschiedlichen Lichtsignaldämpfung in der Atmosphäre hat.

Der Erfindung liegt die Aufgabe zugrunde, ein Verfahren der eingangs genannten Art in der Weise weiterzuentwickeln, daß das von einer Wolke mit gegebenem Reflextionsvermögen reflektierte Signal in seiner Größe sowohl unabhängig von der Höhe der Wolke als such im wesentlichen unabhängig von der Signaldämpfung im Luftraum unterhalb der Wolke ist. Außerdem soll das Verfahren die Möglichkeit schaffen, anzugeben, bis zu welcher Höhe das Meßgerät bei den gerade vorliegenden Wetterverhältnissen Wolken zu erfassen vermag.

Zur Lösung dieser Aufgabe wird ein Verfahren nach den Oberbegriff des Anspruches 1 vorgeschlagen, welches erfindungsgemäß die im kennzeichnenden Teil des Anspruches 1 genannten Merkmale hat.

Vorteilhafte Weiterbildungen der Erfindung sind in den Unteransprüchen genannt.

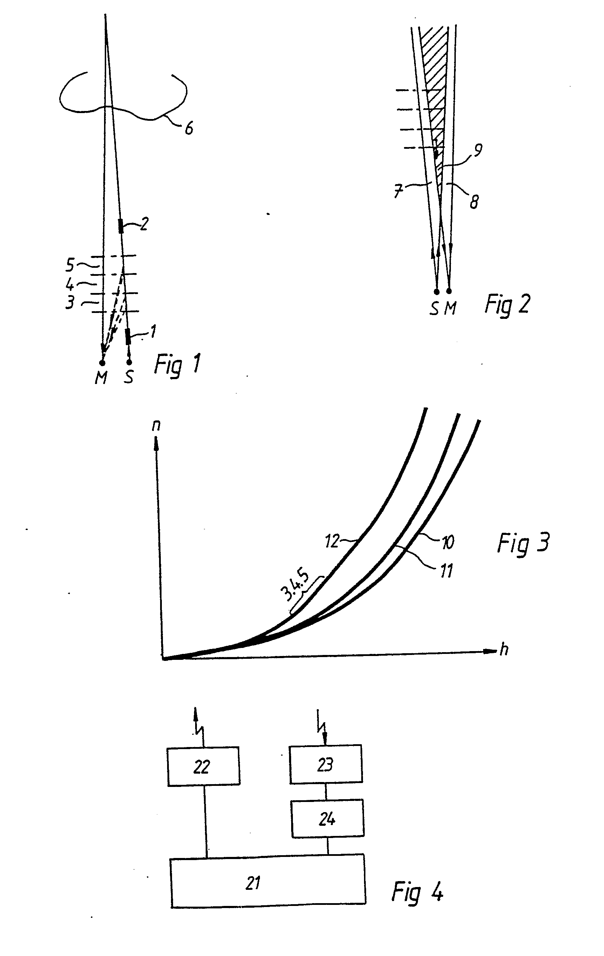

Gemäß dem Verfahren nach der Erfindung wird also für jedes gerade abzutastende Höhenintervall (aktuelles Höhenintervall) die Dämpfung des Lichtsignals in der Atmosphäre unterhalb des aktuellen Höhenintervalls gemessen, und zwar durch Integration des reflektierten Lichtes über alle Höhenintervalle unterhalb des aktuellen Höhenintervalls. Der so gewonene Wert für die Signaldämpfung ist ein Maß für die Erhöhung der ausgesandten Signalenergie zur Kompensation der Signaldämpfung. Die Erhöhung der Signalenergie kann erfolgen durch Vergrößerung der Länge der ausgesandten Impulse, der Impulszahl, der Impulsstärke und/oder der Impulsfrequenz. Die Erhöhung der ausgesandten Signalenergie ist dabei so groß, daß das vom Signaldetektor im Falle des Vorhandenseins einer Wolke erfaßte Signal unabhängig von der Größe der Signaldämpfung im wesentlichen stets gleich groß ist. Hierbei handelt es sich um die sogenannte dämpfungsabhängige Kompensation. Sie wird zweckmäßigerweise zu einer quadratischen Höhenkompensation (Kurve 10 in Fig. 3) addiert. Auch diese Kompensation erfolgt durch Veränderung der ausgesandten Signalenergie mittels Änderung der Impulslänge, der Impulszahl, der Impulsfrequenz oder der Impulsstärke. Eine Erhöhung der Impulszahl bedeutet, daß die Meßzeit verlängert wird. Ein Erhöhung der Impulsfrequenz bedeutet, daß in gleicher Meßzeit mehr Impulse ausgesandt werden. Die Zeit für einen gesamten Meßvorgang (über sämtliche Intervalle) soll eine bestimmte Zeit, z.B. 15 Sekunden, nicht überschreiten. Andererseits dart der Abstand zwischen zwei benachbarten Impulsen einen Mindestwert nicht unterschreiten, da anderenfalls beim erneuten Öffnen des Signalempfängers noch Energie gemessen werden kann, die von dem vorhergehenden Impuls in größeren Höhen reflektiert wurde, was einen Fehler der Messung zur Folge haben würde.

Anhand der Figuren soll die Erfindung näher erläutet werden. Es zeigen

Fig. 1 die Reflektion des Sendesignals in verschiedenen Meßhöhen,

Fig. 2 den Sendebereich des Senders S und den Empfangsbereich des Empfängers M,

Fig. 3 den Zusammenhang zwischen der Meßhöhe h und der Anzahl der Meßimpulse n zur Ausmessung eines Höhenintervalls in der Meßhöhe h,

Fig. 4 ein Blockschaltbild des bei dem Verfahren nach der Erfindung verwendeten Meßsystems.

Das Meßsystem gemäß Figur 4 besteht aus einem Mikroprozessor 21 mit einem Lichtsender 22, z.B. einem Lasersender, einem Empfänger für das vom Lichtsender ausgehende, im Luftraum reflektierte Licht und einem Signaldetektor 24 zum Ausfiltern von Lichtsignalen, die in dem aktuellen (gerade abgetasteten) Höhenintervall reflektiert werden. Beim Messen wird der Höhenmeßbereich, der beispielsweise von 30 bis 3000 m reichen kann, stufenweise abgetastet, indem der Signaldetektor für ein bestimmtes Zeitintervall geöffnet wird, welches in einem bestimmten, dem aktuellen Höhenintervall entsprechenden Zeitabstand der Aussendung eines Lichtimpulses vom Sender folgt. Dieser Zeitabstand ist konstant für alle Impulse, die zum Austasten eines bestimmten Höhenintervalls dienen, wobei in einer Meßhöhe von z.B. 30 m begonnen wird. Ein Höhenintervall kann beispielsweise 5 m groß sein. Der genannte Zeitabstand zwischen ausgesandtem Impuls und dem Öffnungsintervall des Detektors wird mit Übergang von einem Höhenintervall zum nächsten schrittweise vergrößert, bis der gesamte Meßbereich oder der bei den vorhandenen Sichtverhältnissen ausmeßbare Teil desselben durchwandert worden ist.

Als Vorteile des Verfahrens gemäß der Erfindung sind zu nennen:

—Die Lebensdauer des Senders wird erhöht,

—die Messung kann in kürzerer Zeit und damit—bei gegebener Höchstzeit—bis zu einer größeren Höhe durchgeführt werden,

—die Meßfolgen können abgebrochen werden, wenn die mit Rücksicht auf die möglichen Sichtverhältnisse erreichbare Höhe erreicht ist, und es kann sofort mit einem neuen Meßvorgang begonnen werden,

—es kann eine Information über die bei den vorliegenden Sichtverhältnissen maximal mögliche Meßhöhe gewonnen werden,

—der dynamische Bereich des Detektors kann kleiner als bei dem bekannten Verfahren sein, wordurch die Meßanordnung zur Durchführung des Verfahrens billiger und besser wird.

Die Kompensation der ausgesandten Meßenergie mit Rücksicht auf die Dämpfung wird zweckmäßigerweise zu einem Grundwert für die ausgesandte Meßenergie addiert, wobei dieser Grundwert in Abhängigkeit der Höhe h von dem Ausdruck $k \times h^2$ bestimmt wird. Genaugenommen ist die Abhängigkeit des Grundwertes von der Höhe etwas stärker als quadratisch, da auch bei guter Sicht stets eine gewisse Dämpfung vorhanden ist. Außerdem wird eine besondere Kompensation für geometrische Fehler zwischen dem Sender und dem Empfänger im Nahbereich (etwa 100 bis 200 m) vorgenommen. (Siehe Figur 2).

Die Kompensation für die Dämpfung des Meßsignals wird am bestehen mit demselben Meßsystem und damit für denselben Luftraum durchgeführt, wie beim Messen des Auftretens von Wolken. Es ist jedoch auch möglich, eine Funktion für die Kompensation der Dämpfung zu verwenden, die für ein gegebenes Wetter früher aufgenommen wurde und wiederverwendet wird, wenn ein ähnliches Wetter vorliegt. Es kann außerdem vorgesehen werden, daß für den Fall, daß die Dämpfung im Luftraum oder die Dichte der Wolken so stark ist, daß eine Kompensation nicht über die gesamte Höhe des Meßbereiches möglich ist, ein Signal gegeben wird, welches angibt, daß das Meßgerät mit der normalen Meßleistung nicht mehr in der Lage ist, den gesamten Höhenmeßbereich abzutasten. Zweckmäßigerweise wird sofort ein neuer Meßvorgang eingeleitet, wenn die im Empfänger integrierte Meßenergie zeigt, daß eine Messung oberhalb der erreichten Meßhöhe praktisch nicht mehr möglich ist.

Die fest Kompensation nach der obengenannten Grundwertfunktion ist ausreichend, wenn die Dämpfung in dem zu untersuchenden Luftraum klein ist. Eine Wolke kann dann in jedem Meßintervall des Höhenmeßbereiches sicher erfaßt werden. Bei größerer Dämpfung bewirkt diese eine Reduzierung des Meßsignals, die dann automatisch kompensiert wird. Die Dämpfung des Signals durch eine im Meßbereich befindliche Wolke kann auf ähnliche Weise kompensiert werden. Es wird dann also, nachdem die Wolke erfaßt worden ist, die ausgesandte Meßenergie für die über dieser Wolke liegenden Höhenintervalle so stark erhöht, daß auch in diesem Bereich nach weiteren Wolken gesucht werden kann. Auf diese Weise können, so weit die insgesamt verfügbare Energie ausreicht, übereinanderliegende verschiedene Wolken erfaßt werden.

Figur 1 zeigt, wie eine Anzahl Meßimpulse 1, 2 von einem Lichtsender S in den untersuchten Luftraum gesandt wird. Aus jedem Meßintervall, z.B. 3, 4, 5 werden Signale zum Empfänger M reflektiert. Da die Lichtdämpfung in der Atmosphäre unterhalb der zu jedem Höhenintervall gehörenden Meßhöhe durch Integration der reflektierten Energie in M bis hoch zu der aktuellen interessierenden Meßhöhe (hier die der Wolke 6) bestimmt wird, ist man an den Verhältnissen unter dieser interessierenden Meßhöhe, der Wolke 6, weniger interessiert. Man kompensiert den jeweiligen in M integrierten Wert für die Dämpfung dadurch, daß man für die verschie-

nen Höhenintervalle, z.B. 3 bis 5, entweder oder auch gleichzeitig die Impulszahl (längere Meßzeit), die Impulsenergie (Höhe oder Länge des Impulses) oder die Impulsfrequenz der von dem Sender ausgesandten Impulsfolge derart erhöht, daß man stets eine bestimmte, vorzugsweise konstante reflektierte Meßenergie für jedes Meßintervall erhält, falls sich in diesem Meßintervall eine Wolke mit gegebenem Reflektionsvermögen befindet. Unterschiede in der gemessenen reflektierten Energie beruhen dann auf einer unterschiedlichen Dichte (Reflektionsvermögen) der Wolke. Man erhält so (bei konstantem Reflektionsvermögen der Wolke) ein konstantes Signalniveau im Signaldetektor (Empfänger M) ungeachtet der Dämpfung in dem Luftraum unterhalb der Wolke und unabhängig von der Meßhöhe.

Beispielsweise kann man die Meßzeit für jedes Meßintervall verlängern, so daß man eine größere Anzahl von Impulsen erhält, die ein größeres integriertes Signal bewirken. Man erhält also eine Kompensation der Dämpfung auf diesem niedrigeren Höhenniveau.

Figur 2 zeigt den Sendekegel 7 des Senders S und den Empfangskegel 8 des Empfängers (Detektor) M. Der gemeinsame Bereich 9 von Senderkegel und Empfangskegel ist gestrichelt dargestellt.

Figur 3 zeigt, wie die zur Kompensation von Dämpfung und Höhe erforderliche Impulszahl bei verschiedenen Graden der Dämpfung variieren kann. Dabei bezeichnet n die Anzahl der Meßimpulse pro Höhenintervall bei konstanter Impulsenergie. Die Kurve 10 gilt für gute Sicht. Sie hat annähernd den Verlauf einer Parabel, verläuft jedoch geringfügig steiler. Die Kurve 11 gilt für normale Sicht und die Kurve 12 gilt für schlechte Sicht und ungleichmäßige Sichtverhältnisse (bei unterschiedlicher Meßhöhe h). Bezeichnet man mit T den Transmissionsfaktor (Umrechnungsfunktion zwischen reflektiertem Licht und Dämpfung), der kleiner als 1 ist (Lichtdämpfung in der Atmosphäre), so gilt:

Bei guter Sicht 10

$$n = \frac{k \times h^2}{T_{10}} \approx k \times h^2$$

Bei normaler Sicht 11

$$n = \frac{k \times h^2}{T_{11}}$$

Bei schlechter Sicht 12

$$n = \frac{k \times h^2}{T_{12}}$$

wobei k eine Konstante ist.

Bei schlechter Sicht (in den Höhenintervallen 3, 4 oder 5) kann man beispielsweise die Impulszahl pro Höhenintervall erhöhen, wodurch man eine n-h-Kurve erhält, die sich stärker der Kurve 12 in Figur 3 nähert.

Das vorstehend beschriebene Verfahren kann im Rahmen des offenbarten allgemeinen Erfindungsgedankens in vielfacher Weise variiert werden.

**Patentansprüche**

1. Verfahren zum Messen der Wolkenhöhe, bei dem von einem Sender in einen zu untersuchenden Luftraum emittierte Lichtimpulse jeweils getrennt nach ihrer Herkunft aus unterschiedlichen Höhenintervallen des Luftraums erfaßt werden, indem ein Empfänger nach Aussendung eines jeden Lichtimpulses jeweils nach einer Verzögerung, die der Laufzeit des Impulses vom Sender zu einem ausgewählten Höhenintervall und zurück zum Empfänger entspricht, für eine der Größe des untersuchten Höhenintervalls entsprechende Zeit aktiviert wird, wobei die Höhenintervalle ausgehend vom Boden der Reihe nach und vorzugsweise jeweils mehrfach überprüft werden und für jedes Höhenintervall die aus dem Höhenintervall stammenden Impulssignale im Empfänger aufintegriert werden, dadurch gekennzeichnet, daß die zur Untersuchung jedes Höhenintervalls jeweils ausgesendete Lichtenergie in Abhängigkeit von einem Steuersignal gesteuert wird, das durch Integration der reflektierten Impulssignale aus jeweils allen unterhalb des momentan interessierenden Höhenintervalls liegenden Höhenintervallen erzeugt wird, daß die Steuerung der Lichtenergie durch Veränderung der Sendezeit und damit der Impulszahl und/oder durch Veränderung der Impulsfrequenz und/oder der Impulsenergie bewirkt wird und daß die Veränderung so bemessen wird, daß die Energie der empfangenen, durch Reflexion an einer Wolke mit gegebenem Reflexionsvermögen entstehenden Impulssignale im wesentlichen für jedes Höhenintervall gleich ist.

2. Verfahren nach Anspruch 1, dadurch gekennzeichnet, daß das Steuersignal durch Addition eines Grundwertes der Größe $k \times h^2$ zu dem Ergebnis der Integration über alle unter dem interessierenden Intervall liegenden Intervalle gewonnen wird, wobei h die Höhe des aktuellen Höhenintervalls und k eine Konstante ist.

3. Verfahren nach Anspruch 1 oder 2, dadurch gekennzeichnet, daß der geometrische Fehler zwischen Sender und Empfänger im Nahbereich bei der Bildung des Steuersignals berücksichtigt wird.

4. Verfahren nach einem der Ansprüche 2 oder 3, dadurch gekennzeichnet, daß zur Messung der Impulssignale aus den Höhenintervallen vor dem interessierenden Höhenintervall dasselbe Meßsystem verwendet wird wie zur Feststellung einer Wolke im interessierenden Intervall.

5. Verfahren nach einem der vorhergehenden Ansprüche, dadurch gekennzeichnet, daß, wenn die Dämpfung im Luftraum oder die Dichte der Wolken so stark ist, daß eine Kompensation der Verluste der Sendeenergie nicht mehr über den ganzen Höhenmeßbereich möglich ist, ein Signal gegeben wird, das anzeigt, daß das Meßgerät bei normaler Meßleistung nicht in der Lage ist, den gesamten Höhenmeßbereich zu erfassen.

6. Verfahren nach einem der vorhergehenden Ansprüche, dadurch gekennzeichnet, daß unmittelbar ein neuer Meßvorgang beginnnt, wenn die über die dem interessierenden Intervall vorausgehenden Intervalle integrierte Meßenergie im Empfänger einen solchen Wert erreicht, daß oberhalb des erreichten Höhenintervalls praktisch keine Messung mehr möglich ist.

7. Verfahren nach einem der vorhergehenden Ansprüche, dadurch gekennzeichnet, daß der Wert des Steuersignals zur Berechnung der vertikalen Sichtverhältnisse dient.

8. Verfahren nach einem der vorhergehenden Ansprüche, dadurch gekennzeichnet, daß als Signalenergie Laserstrahlen verwendet werden.

## Revendications

1. Procédé de mesure de l'altitude des nuages, qui consiste à détecter, séparément suivant leur origine et dans divers intervalles d'altitude, des impulsions lumineuses émises par un émetteur dans l'espace à étudier, en activant, pendant une durée correspondant à l'étendue de l'intervalle d'altitude à étudier, un récepteur après émission de chaque impulsion lumineuse et après un retard qui correspond à la durée du trajet de l'impulsion de l'émetteur à un intervalle d'altitude sélectionné et de retour au récepteur, les intervalles d'altitude étant étudiés successivement à partir du sol et, de préférence, à plusieurs reprises et, pour chaque intervalle d'altitude, les signaux impulsionnels provenant de l'intervalle d'altitude étant intégrés dans le récepteur, caractérisé en ce qu'il consiste à commander l'énergie lumineuse émise pour l'étude de chaque intervalle d'altitude, en fonction d'un signal de commande élaboré en intégrant les signaux impulsionnels réfléchis par tous les intervalles d'altitude se trouvant en dessous de l'intervalle d'altitude auquel on s'intéresse présentement, à effectuer la commande de l'énergie lumineuse en modifiant la durée d'émission et donc le nombre des impulsions et/ou en modifiant la fréquence des impulsions et/ou l'énergie de chaque impulsions et à faire en sorte que cette modification soit telle que l'énergie des signaux impulsionnels reçus, créés par réflexion sur un nuage à pouvoir réfléchissant donné, soit sensiblement la même pour chaque intervalle d'altitude.

2. Procédé suivant la revendication 1, caractérisé en ce qu'il consiste à obtenir le signal de commande en ajoutant une valeur de base de dimension $k \times h^2$ au résultat de l'intégration sur tous les intervalles se trouvant en dessous de l'intervalle auquel on s'intéresse, h étant l'altitude de l'intervalle d'altitude en question et k étant une constante.

3. Procédé suivant la revendication 1 ou 2, caractérisé en ce qu'il consiste à tenir compte du défaut géométrique entre l'émetteur et le récepteur dans la zone d'action immédiate pour la formation du signal de commande.

4. Procédé suivant l'une des revendications 2 ou 3, caractérisé en ce qu'il consiste, pour mesurer les signaux impulsionnels provenant des intervalles d'altitude avant l'intervalle d'altitude auquel on s'intéresse, à utiliser le même système de mesure que pour constater la présence d'un nuage dans l'intervalle auquel on s'intéresse.

5. Procédé suivant l'une des revendications précédentes, caractérisé en ce qu'il consiste, si l'atténuation dans l'espace ou si la densité du nuage est si intense, qu'une compensation des pertes de l'énergie émise n'est plus possible sur toute la plage de mesure des altitudes, à émettre un signal qui indique que l'appareil de mesure n'est plus à même, pour la capacité normale de mesure, de détecteur toute la plage de mesure des altitudes.

6. Procédé suivant l'une des revendications précédentes, caractérisé en ce qu'il consiste à faire commencer un nouveau processus de mesure immédiatement après que l'énergie mesurée, intégrée sur les intervalles précédant l'intervalle auquel on s'intéresse, a atteint dans le récepteur une valeur telle que pratiquement plus aucune mesure n'est possible au-dessus de l'intervalle d'altitude atteint.

7. Procédé suivant l'une des revendications précédentes, caractérisé en ce qu'il consiste à se servir de la valeur du signal de commande pour calculer les conditions de visibilité verticale.

8. Procédé suivant l'une des revendications précédentes, caractérisé en ce qu'il consiste à utiliser comme énergie donnant un signal des faisceaux laser.

## Claims

1. Method of measuring the altitude of clouds by detecting light pulses emitted by a transmitter into the air space to be scanned, the detection taking place separately with respect to signals coming from different altitude intervals in the air space, using a receiver which is activated after the emission of each light pulse with a time-delay, which corresponds to the time interval the emitted pulse requires to travel from the transmitter to the selected altitude interval and back to the receiver, the activating of the receiver taking place for a time interval corresponding to the size of the scanned altitude interval, whereby the altitude intervals, beginning at the ground, are scanned consecutively and for several times, and whereby, for each altitude interval, the pulse signals originating from the actual altitude interval are integrated in the receiver, characterized in that the light energy emitted for scanning individually each of the altitude intervals is controlled in dependence of a control signal which is obtained by integration of the reflected pulse signals from all altitude intervals below the currently scanned altitude interval, that the control of the light energy is effected by varying the emission time and thus the pulse number and/or by varying the pulse frequency and/or the pulse energy, and that this variation is dimensioned such that the energy of the pulse signals received due to signal reflection from a cloud of given reflection capacity is substantially equal for all altitude intervals.

2. Method according to Claim 1, characterized in that the control signal is attained by adding a basic value of a quantity $k \times h^2$ to the value resulting from the integration over all intervals below the currently scanned interval, with h being the height of the actual altitude interval and k being a constant.

3. Method according to Claim 1 or 2, characterized in that the geometrical error between the transmitter and the receiver in the close range is taken into account in forming the control signal.

4. Method according to any of Claims 2 or 3, characterized in that for the measurement of the pulse signals from the altitude intervals below the currently scanned altitude interval the same measuring system is used as for the detection of a cloud in the currently scanned interval.

5. Method according to any of the preceding Claims, characterized in that, when the attenuation in the air space or the density of the clouds is so strong, that a compensation for the losses in the transmission energy is no longer possible over the entire altitude measuring range, a signal is generated indicating that the measuring means are no longer capable of scanning the entire altitude measuring range at the normal measuring power level.

6. Method according to any of the preceding Claims, characterized in that a new measuring sequence is immediately started when the measuring energy integrated from all altitude intervals preceding the currently scanned altitude intervals amounts to such a value in the receiver that no further measurement is practically possible above the reached altitude interval.

7. Method according to any of the preceding Claims, characterized in that the value of the control signal is used to calculate the vertical visibility conditions.

8. Method according to any of the preceding Claims, characterized in that laser beams are used as signal energy.

Fig 1

Fig 2

Fig 3

Fig 4